# EUROPÄISCHE PATENTSCHRIFT

(11) **EP 2 213 890 B1**
(45) Veröffentlichungstag und Bekanntmachung des Hinweises auf die Patenterteilung: **27.11.2013**
(21) Anmeldenummer: 10000844.0
(22) Anmeldetag: 28.01.2010
(51) Int. Cl.: F16C 29/04, F16C 29/10, B23Q 1/28

(54) **Linearführung mit Klemmvorrichtung**
Linear guide with locking means
Guidage linéaire avec dispositif de serrage

(30) Priorität: 03.02.2009 EP 09001429
(43) Veröffentlichungstag der Anmeldung: 04.08.2010
(73) Patentinhaber: AB SKF, 415 50 Göteborg (SE)
(72) Erfinder: Edelmann, Ludwig, 97717 Sulzthal (DE); Fucks, Thomas, 97520 Röthlein (DE); Gransow, Anita, 97526 Sennfeld (DE); Jeschka, Erwin, 97711 Maßbach (DE)
(74) Vertreter: Kohl, Thomas

(56) Entgegenhaltungen:
- DE-A1- 2 941 475
- DE-A1- 3 539 860
- DE-A1- 3 807 880
- DE-A1- 19 934 961
- DE-T2- 69 635 596
- DE-U- 1 954 508

## Beschreibung

Die Erfindung betrifft eine Linearführung, die mindestens ein erstes Führungselement und mindestens ein zweites Führungselement umfasst, wobei das zweite Führungselement relativ zum ersten Führungselement in eine Verschieberichtung translatorisch verschieblich ist, wobei zwischen den Führungselementen mindestens eine Linearlagerung angeordnet ist, wobei die Linearlagerung Wälzkörper aufweist, die in einem Käfig angeordnet sind und von diesem gehalten werden, wobei Klemmmittel vorhanden sind, mit denen die beiden Führungselemente in einer gewünschten Relativposition miteinander verspannt werden können und wobei mindestens ein Federelement zwischen den beiden Führungselementen wirksam angeordnet sind, mit denen die relative Verschiebung der beiden Führungselemente in einen Richtungssinn der Verschieberichtung unterstützt werden kann.

Für verschiedene Anwendungen werden gattungsgemäße Linearführungen benötigt. Sie werden beispielsweise bei Armlehnen in Fahrzeugen, z. B. in Gabelstaplern, eingesetzt.

Die DE 3 807 880 A1 zeigt beispielsweise eine Armlehne mit einer Laufschienen-Kugelführung.

Für diese Anwendung werden häufig Gleitführungen aus Kunststoffteilen verwendet, die in einem Blech geführt sind. Dabei kann vorgesehen sein, dass für eine Längs- und Höheneinstellung zwei Klemmschrauben an einer Führungsanordnung vorgesehen werden, bei denen zwei kreuztischartig angeordnete Linearführungen zusammenwirken. Nach dem Lösen der Klemmschrauben kann eine Anpassung der Führungsanordnung in zwei zueinander senkrechten Achsen erfolgen. Ist die gewünschte Position erreicht, werden die Klemmschrauben wieder angezogen und die Armlehne so festgelegt. Entsprechendes gilt, wenn eine Wälzführung als Linearlagerung verwendet wird.

Im Falle dessen, dass eine Verschiebebewegung in Richtung der Schwerkraft erfolgen soll, ist die gattungsgemäße Konzeption einer Linearführung vorteilhaft. Das mindestens eine Federelement kann dann nämlich eine Halte- bzw. Stützfunktion gegen die Schwerkraft ausüben, wenn die Linearführung zwecks Verstellung in einen ungeklemmten Zustand gebracht wird.

Nachteilig ist bei der gattungsgemäßen Linearführung, dass zum Einstellen einer gewünschten Position zunächst die Klemmschraube bzw. die Klemmschrauben gelöst werden muss bzw. müssen, um eine Verstellung der Linearführung vornehmen zu können. In diesem Zustand ist die gesamte Anordnung sehr instabil. Dies hat auch zur Folge, dass die sich zwischen den Führungselementen der Linearführung befindliche Linearlagerung keine Unterstützung hat. Es kann daher passieren, dass die gesamte Linearlagerung, insbesondere die Einheit bestehend aus Käfig samt Wälzkörpern, bis zu ihrer unteren Endposition infolge der Schwerkraft absinkt und folglich nicht mehr in der benötigten Position ist, wenn die Führungselemente wieder verklemmt bzw. verspannt werden. Im übrigen ist der Verschiebekomfort bei der Einstellung dabei gering. Ferner ist die Anordnung während des Einstellens sehr weich. Die Steifigkeit wird erst wieder erreicht, wenn die Klemmschraube wieder angezogen wird.

Der Erfindung liegt die **Aufgabe** zugrunde, eine Linearführung der eingangs genannten Art so fortzubilden, dass die erläuterten Nachteile vermieden werden. Demgemäß soll ein verbesserter Einstellkomfort erreicht werden, wenn die Linearführung in eine gewünschte Relativposition der beiden Führungselemente verbracht werden. Dabei gilt das Hauptaugenmerk darauf, dass der Käfig samt Wälzkörpern bei der Einstellbewegung nicht in eine unzulässige Lage verrutscht, wenn in der Linearführung zu wenig oder gar keine Vorspannung mehr vorhanden ist, insbesondere wenn die Verschiebebewegung vertikal erfolgt oder zur Vertikalen einen spitzen Winkel einschießt. Die Linearführung soll gut in eine entsprechende Anwendung integrierbar sein, insbesondere in die Armlehne eines Fahrzeugs. Ferner soll eine kompakte und kostengünstige Herstellung der Linearführung ermöglicht werden.

Die **Lösung** dieser Aufgabe durch die Erfindung ist **dadurch gekennzeichnet, dass** der Käfig an einem Punkt zwischen den beiden Endpunkten des Federelements mit dem Federelement so verbunden ist, dass das Federelement auf den Käfig eine Zugkraft in einen Richtungssinn der Verschieberichtung ausüben kann.

Das Federelement weist dabei über seine Längserstreckung vorzugsweise eine gleichmäßige Federkonstante auf. Das Federelement ist bevorzugt als Schraubenfeder ausgeführt.

Der Punkt, an dem der Käfig mit dem Federelement verbunden ist, liegt besonderes bevorzugt in der Mitte zwischen den beiden Endpunkten.

Die Linearlagerung kann Laufbahnen für die Wälzkörper aufweisen, wobei die Laufbahnen an oder in den Führungselementen angeordnet sind.

Bevorzugt sind zwei Linearlagerungen parallel zueinander verlaufend zwischen den Führungselementen angeordnet. Ferner können gemäß einer bevorzugten Ausführungsform der Erfindung zwei Federelemente in den Seitenbereichen der Führungselemente angeordnet sein. Das Klemmmittel kann dabei zwischen den beiden Linearlagerungen angeordnet sein. Die Anordnung der beiden Linearlagerungen und Federelemente ist dabei bevorzugt symmetrisch ausgebildet. Insbesondere kann vorgesehen werden, dass die Symmetrieebene durch das Klemmmittel verläuft.

Das Klemmmittel ist bevorzugt als Klemmschraube ausgebildet.

Die Wälzkörper sind zumeist Kugeln.

Bevorzugt ist die Verschieberichtung vertikal angeordnet.

Das mindestens eine Federelement kann an Haken an den Führungselementen eingehängt sein. Das mindestens eine Federelement kann indes mittels eines seitlich am Käfig angeordneten und auskragenden Halters mit dem Käfig verbunden sein, wobei der Halter einen Abschnitt des Federelements, insbesondere eine Federwindung, greift.

Mit der vorgeschlagenen Ausgestaltung wird es möglich, das Vorhandensein einer Zugfeder, die originär zwischen den beiden Führungselementen wirkt, dafür zu nutzen, auch den Käfig bei seiner Bewegung zu unterstützen und ihn insbesondere nicht abfallen zu lassen, wenn sich die Linearführung beim Verstellen im nicht geklemmten Zustand befindet.

Bei einer Zugfeder mit konstanter Federrate über der Länge wird der Käfig genau in der Mitte der Feder zwischen den beiden Endpunkten eingehängt. Dieser Punkt erfährt also genau die Hälfte des gesamten Verschiebeweges. Dies stimmt mit dem Umstand überein, dass auch der Käfig beim schlupffreien Abrollen der Wälzkörper auf den Führungsbahnen der Führungselemente den halben Verschiebeweg zurücklegt. Demgemäß ist bevorzugt vorgesehen, dass der Käfig in der Mitte der Feder formbündig aufgehängt wird, damit kein Schlupf entsteht und der Käfig so seine exakte Position behält.

Damit wird also erreicht, dass der Käfig auch dann, wenn sich die Linearführung im nicht geklemmten Zustand befindet und die Führung demzufolge nicht vorgespannt ist, nicht aufgrund der Gewichtskraft absinkt, sondern durch die Feder gehalten wird.

Mit der vorgeschlagenen Lösung kann insbesondere eine Armlehnenmechanik problemlos in zwei (zueinander senkrechten) Richtungen - nach Art eines Kreuztisches - einfach und präzise eingestellt werden. In der gewünschten Endlage werden die Führungselemente mittels der Klemmschraube verspannt und so festgelegt. Dabei sind erfindungsgemäß Vorkehrungen getroffen, dass der Käfig samt Wälzkörpern auch dann in Position gehalten wird, wenn eine der Verschieberichtungen vertikal erfolgt oder zur Vertikalen einen (spitzen) Winkel einschließt.

Die Linearführung macht bei der Verstellung daher einen qualitativ hochwertigen Eindruck.

Die vorgeschlagene Linearführung kann direkt in eine Armlehne eines Fahrzeugs integriert werden. Viele der benötigten Metall- und Kunststoffteile können als Druckgussteile gefertigt werden. Die Anlaufelemente (Blechlaufbahnen) können auf den Führungselementen, beispielsweise ausgeführt als Aluminium-Druckgussteile, montiert werden.

Daher ergibt sich eine kostengünstige Herstellung.

Das vorgeschlagene Konzept ist besonders für Linearführungen interessant, die einen begrenzten Hub ausüben, der zumindest teilweise gegen die Schwerkraft stattfindet (Bewegung in vertikale Richtung oder unter einem spitzen Winkel hierzu). Genauso eignet sich das Erfindungskonzept aber auch für Anwendungen, bei denen die Führungselemente (Schiene) der Linearführung einfach mit einer Zugfeder unterstützt werden sollen.

Das Konzept ist dabei für lineare, spielfreie Verstellungen mit Klemmung in Armlehnen oder auch in Lenksäulen in Kraftfahrzeugen, insbesondere bei LKW, vorgesehen. Im Prinzip kommen aber alle Arten von Linearführungen in Frage, bei denen Linearkugellager verwendet werden.

In der Zeichnung ist ein Ausführungsbeispiel der Erfindung dargestellt. Es zeigen:
- Fig. 1: eine Linearführung, teilweise geschnitten dargestellt, wobei sich ein be- wegliches Führungselement relativ zu einem ortsfesten Führungselement in einer untersten Position befindet, und
- Fig. 2: die Linearführung nach Fig. 1, wobei sich das bewegliche Führungsele- ment jetzt relativ zu dem ortsfesten Führungselement in einer obersten Position befindet.

In den beiden Figuren ist dieselbe Linearführung 1 dargestellt, die zwei Führungselemente 2 und 3 aufweist. Das Führungselement 2 ist ortsfest, das Führungselement 3 ist relativ zum Führungselement 2 verschieblich, und zwar in eine vertikal ausgerichtete Verschieberichtung T.

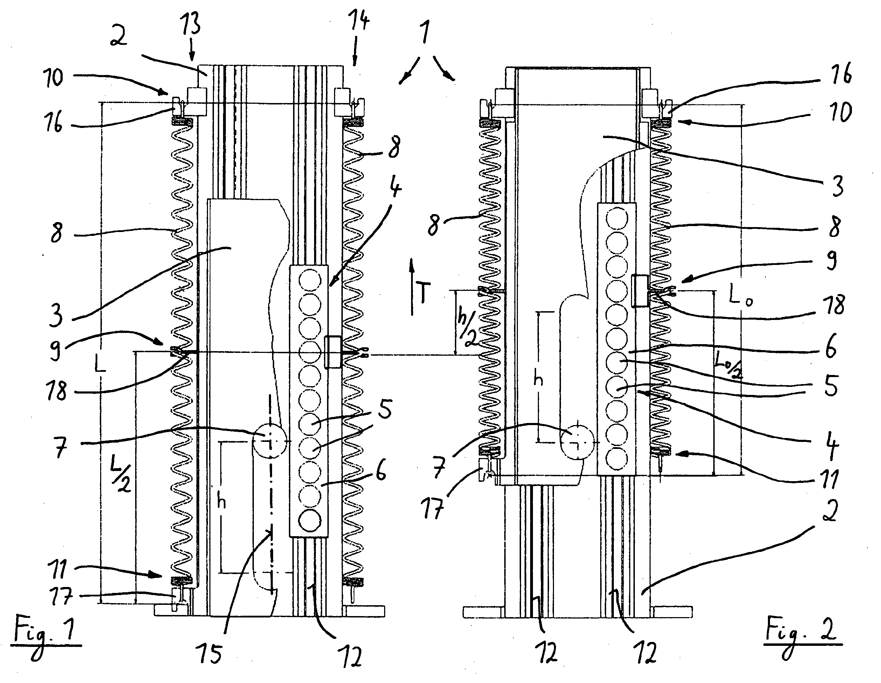

In Fig. 1 ist der Zustand dargestellt, in der das Führungselement 3 seine unterste Position einnimmt; in Fig. 2 ist der Zustand zu sehen, wenn das Führungselement 3 in der obersten Position ist.

Demgemäß führt das Führungselement 3 bei der Bewegung von der Stellung gemäß Fig. 1 zu der gemäß Fig. 2 einen Hub h aus.

Zwischen den beiden Führungselementen 2, 3 sind zwei Linearlagerungen 4 angeordnet (von denen nur die rechte zu sehen ist). Jede Linearlagerung 4 hat Wälzkörper 5 in Form von Kugeln, die in einem Käfig 6 angeordnet sind. Rollen die Kugeln 5 auf Laufbahnen 12 in den Führungselementen 2, 3 schlupffrei ab, bewegt sich beim Hub h des Führungselements 3 folglich der Käfig 6 um den halben Hub h/2.

Die beiden Führungselemente 2, 3 können in einer gewünschten Relativposition verspannt bzw. geklemmt werden, wozu Klemmmittel 7 in Form einer Klemmschraube vorgesehen sind. Die Klemmschraube 7 ist dabei zentrisch in der Linearführung 1 positioniert, d. h. eine Symmetrieebene 15 (s. Fig. 1) verläuft vertikal in der Mitte der Linearführung 1, wobei die Führung weitgehend symmetrisch zu der Ebene ausgebildet ist.

Das Führungselement 3 bewegt sich, wie oben erläutert, vertikal nach oben (und nach unten), wenn eine Verstellung zwischen den Führungselementen 2, 3 vorgenommen werden soll. Demgemäß wirkt die Gewichtskraft auf das Führungselement 3. Um diese jedenfalls teilweise - vorzugsweise vollständig - auszugleichen, sind in den Seitenbereichen 12, 13 der Linearführung 1 Federelemente 8 in Form von Schraubenfedern angeordnet. Die Schraubenfedern 8 sind in Haken 16 und 17 am Führungselement 2 bzw. 3 eingehängt. Zwischen den Haken 16, 17 erstrecken sich die Federelemente 8 also von ihren Endpunkten 10 und 11 über eine Länge L. In Fig. 2 ist diese Länge L₀ für die nicht gespannte (bzw. nur teilweise gespannte) Feder eingetragen, während in Fig. 1 die Länge L für die (maximal) gespannte Feder angegeben ist.

Wesentlich ist, dass der Käfig 6 an einem Punkt 9 zwischen den beiden Endpunkten 10 und 11 des Federelements 8 mit dem Federelement 8 so verbunden ist, dass das Federelement 8 auf den Käfig 6 eine Zugkraft in einen Richtungssinn der Verschieberichtung T (nämlich nach oben) ausüben kann. Hierfür ist am Käfig 6 ein seitlich auskragender Halter 18 angebracht, an dem die Feder 8 eingehängt ist.

Dabei liegt der Punkt 9 genau in der Mitte zwischen den Endpunkten 10 und 11. Angegeben ist in den Figuren, dass folglich vom Punkt 9 bis zu einem der Endpunkte 10 bzw. 11 die Federlänge L/2 bzw. L₀/2 verbleibt. Bei vollständigem Hub h des Führungselements 3 bewegt sich bei schlupffreiem Abrollen der Kugeln 5 der Käfig 6 um den halben Hub h/2, wie sich aus der Zusammenschau der Figuren 1 und 2 ergibt.

Wichtig ist beim Einsatz der beiden Linearlagerungen 4, dass in jeder beliebigen Position der Klemmung der beiden Führungselemente 2, 3 dafür gesorgt wird, dass die Wälzkörper 5 der beiden Käfige 6 oberhalb und unterhalb der Klemmschraube 7 vorhanden sind. Ist dies nicht der Fall, erzeugt man beim Verklemmen bzw. Verspannen mittels der Klemmschraube 7 ein Moment und die Position der Teile zueinander ist nicht sicher.

Wichtig ist weiterhin, dass in jeder Klemmposition der beiden Führungselemente 2, 3 die (horizontal verlaufende) Verbindungslinie zwischen den beiden untersten bzw. obersten Kugeln 5 symmetrisch auf gegenüberliegenden Seiten der Achse der Klemmschraube 7 liegen (also symmetrisch zur Symmetrieebene 15). Nur so erfolgt eine gleichmäßige Verspannung der Linearführung, wenn die Klemmschraube 7 angezogen wird. Die genannte Käfigaufhängung an den Federn 8 stellt dies sicher.

### Bezugszeichenliste

- 1: Linearführung
- 2: erstes Führungselement
- 3: zweites Führungselement
- 4: Linearlagerung
- 5: Wälzkörper
- 6: Käfig
- 7: Klemmmittel
- 8: Federelement
- 9: Punkt zwischen den beiden Endpunkten
- 10: Endpunkt
- 11: Endpunkt
- 12: Laufbahn
- 13: Seitenbereich
- 14: Seitenbereich
- 15: Symmetrieebene
- 16: Haken
- 17: Haken
- 18: Halter

- T: Verschieberichtung
- L: Länge der gespannten Feder
- L₀: Länge der nicht gespannten (nur teils gespannten) Feder
- h: Hub

## Patentansprüche

1. Linearführung (1), die mindestens ein erstes Führungselement (2) und mindestens ein zweites Führungselement (3) umfasst, wobei das zweite Führungselement (3) relativ zum ersten Führungselement (2) in eine Verschieberichtung (T) translatorisch verschieblich ist, wobei zwischen den Führungselementen (2, 3) mindestens eine Linearlagerung (4) angeordnet ist, wobei die Linearlagerung (4) Wälzkörper (5) aufweist, die in einem Käfig (6) angeordnet sind und von diesem gehalten werden, wobei Klemmittel (7) vorhanden sind, mit denen die beiden Führungselemente (2, 3) in einer gewünschten Relativposition miteinander verspannt werden können und wobei mindestens ein Federelement (8) zwischen den beiden Führungselementen (2, 3) wirksam angeordnet sind, mit denen die relative Verschiebung der beiden Führungselemente (2, 3) in einen Richtungssinn der Verschieberichtung (T) unterstützt werden kann,
**dadurch gekennzeichnet,**
**dass** der Käfig (6) an einem Punkt (9) zwischen den beiden Endpunkten (10, 11) des Federelements (8) mit dem Federelement (8) so verbunden ist, dass das Federelement (8) auf den Käfig (6) eine Zugkraft in einen Richtungssinn der Verschieberichtung (T) ausüben kann.

2. Linearführung nach Anspruch 1, **dadurch gekennzeichnet, dass** das Federelement (8) über seine Längserstreckung eine gleichmäßige Federkonstante aufweist.

3. Linearführung nach Anspruch 2, **dadurch gekennzeichnet, dass** das Federelement (8) eine Schraubenfeder ist.

4. Linearführung nach einem der Ansprüche 1 bis 3, **dadurch gekennzeichnet, dass** der Punkt (9), an dem der Käfig (6) mit dem Federelement (8) verbunden ist, in der Mitte zwischen den beiden Endpunkten (10, 11) liegt.

5. Linearführung nach einem der Ansprüche 1 bis 4, **dadurch gekennzeichnet, dass** die Linearlagerung (4) Laufbahnen (12) für die Wälzkörper (5) aufweist, wobei die Laufbahnen (12) an oder in den Führungselementen (2, 3) angeordnet sind.

6. Linearführung nach einem der Ansprüche 1 bis 5, **dadurch gekennzeichnet, dass** zwei Linearlagerungen (4) parallel zueinander verlaufend zwischen den Führungselementen (2, 3) angeordnet sind.

7. Lineafiührung nach einem der Ansprüche 1 bis 6, **dadurch gekennzeichnet, dass** zwei Federelemente (8) in den Seitenbereichen (13, 14) der Führungselemente (2, 3) angeordnet sind.

8. Linearführung nach Anspruch 6 oder 7, **dadurch gekennzeichnet, dass** das Klemmmittel (8) zwischen den beiden Linearlagerungen (4) angeordnet ist.

9. Linearführung nach einem der Ansprüche 6 bis 8, **dadurch gekennzeichnet, dass** die Anordnung der beiden Linearlagerungen (4) und Federelemente (8) symmetrisch ist.

10. Linearführung nach Anspruch 9, **dadurch gekennzeichnet, dass** die Symmetrieebene (15) durch das Klemmmittel (8) verläuft.

11. Linearführung nach einem der Ansprüche 1 bis 10, **dadurch gekennzeichnet, dass** das Klemmmittel (8) als Klemmschraube ausgebildet ist.

12. Linearführung nach einem der Ansprüche 1 bis 11, **dadurch gekennzeichnet, dass** die Wälzkörper (7) Kugeln sind.

13. Linearführung nach einem der Ansprüche 1 bis 12, **dadurch gekennzeichnet, dass** die Verschieberichtung (T) vertikal angeordnet ist.

14. Linearführung nach einem der Ansprüche 1 bis 13, **dadurch gekennzeichnet, dass** das mindestens eine Federelement (8) an Haken (16, 17) an den Führungselementen (2, 3) eingehängt ist.

15. Linearführung nach einem der Ansprüche 1 bis 14, **dadurch gekennzeichnet, dass** das mindestens eine Federelement (8) mittels eines seitlich am Käfig (6) angeordneten und auskragenden Halters (18) mit dem Käfig verbunden ist, wobei der Halter einen Abschnitt des Federelements (8), insbesondere eine Federwindung, greift.

## Claims

1. Linear guide (1) which comprises at least one first guide element (2) and at least one second guide element (3), wherein the second guide element (3) is displaceable in a translatory manner in a displacement direction (T) relative to the first guide element (2), wherein at least one linear bearing (4) is arranged between the guide elements (2, 3), wherein the linear bearing (4) has rolling bodies (5) which are arranged in a cage (6) and are held by the latter, wherein there are locking means (7) with which the two guide elements (2, 3) can be braced in a desired relative position to each other, and wherein at least one spring element (8) is actively arranged between the two guide elements (2, 3) and can be used to support the relative displacement of the two guide elements (2, 3) in one direction of the displacement direction (T), **characterized in that** the cage (6) is connected to the spring element (8) at a point (9) between the two end points (10, 11) of the spring element (8) in such a manner that the spring element (8) can exert a tensile force on the cage (6) in one direction of the displacement direction (T).

2. Linear guide according to Claim 1, **characterized in that** the spring element (8) has a uniform spring constant over the longitudinal extent thereof.

3. Linear guide according to Claim 2, **characterized in that** the spring element (8) is a helical spring.

4. Linear guide according to one of Claims 1 to 3, **characterized in that** the point (9) at which the cage (6) is connected to the spring element (8) is located in the centre between the two end points (10, 11).

5. Linear guide according to one of Claims 1 to 4, **characterized in that** the linear bearing (4) has raceways (12) for the rolling bodies (5), wherein the raceways (12) are arranged on or in the guide elements (2, 3).

6. Linear guide according to one of Claims 1 to 5, **characterized in that** two linear bearings (4) are arranged running parallel to each other between the guide elements (2, 3).

7. Linear guide according to one of Claims 1 to 6, **characterized in that** two spring elements (8) are arranged in the side regions (13, 14) of the guide elements (2, 3).

8. Linear guide according to Claim 6 or 7, **characterized in that** the locking means (7) is arranged between the two linear bearings (4).

9. Linear guide according to one of Claims 6 to 8, **characterized in that** the arrangement of the two linear bearings (4) and spring elements (8) is symmetrical.

10. Linear guide according to Claim 9, **characterized in that** the plane of symmetry (15) runs through the locking means (7).

11. Linear guide according to one of Claims 1 to 10, **characterized in that** the locking means (7) is in the form of a locking screw.

12. Linear guide according to one of Claims 1 to 11, **characterized in that** the rolling bodies (5) are balls.

13. Linear guide according to one of Claims 1 to 12, **characterized in that** the displacement direction (T) is arranged vertically.

14. Linear guide according to one of Claims 1 to 13, **characterized in that** the at least one spring element (8) is suspended on the guide elements (2, 3) at hooks (16, 17).

15. Linear guide according to one of Claims 1 to 14, **characterized in that** the at least one spring element (8) is connected to the cage by means of a projecting holder (18) arranged laterally on the cage (6), wherein the holder grips a section of the spring element (8), in particular a spring winding.

## Revendications

1. Guidage linéaire (1) comprenant au moins un premier élément de guidage (2) et au moins un deuxième élément de guidage (3), le deuxième élément de guidage (3) pouvant être déplacé en translation par rapport au premier élément de guidage (2) dans une direction de déplacement (T), entre les éléments de guidage (2, 3) étant disposé au moins un support sur palier linéaire (4), le support sur palier linéaire (4) présentant des corps de roulement (5) qui sont disposés dans une cage (6) et qui sont retenus par celle-ci, des moyens de serrage (7) étant prévus, lesquels permettent de serrer ensemble les deux éléments de guidage (2, 3) dans une position relative souhaitée et au moins un élément de ressort (8) étant disposé de manière fonctionnelle entre les deux éléments de guidage (2, 3), lequel ou lesquels permettent de supporter le déplacement relatif des deux éléments de guidage (2, 3) dans un sens de direction de la direction de déplacement (T),
**caractérisé en ce que**
la cage (6) est connectée à l'élément de ressort (8) en un point (9) entre les deux points d'extrémité (10, 11) de l'élément de ressort (8) de telle sorte que l'élément de ressort (8) puisse exercer sur la cage (6) une force de traction dans un sens de direction de la direction de déplacement (T).

2. Guidage linéaire selon la revendication 1, **caractérisé en ce que** l'élément de ressort (8) présente, sur son étendue longitudinale, une constante de ressort uniforme.

3. Guidage linéaire selon la revendication 2, **caractérisé en ce que** l'élément de ressort (8) est un ressort à boudin.

4. Guidage linéaire selon l'une quelconque des revendications 1 à 3, **caractérisé en ce que** le point (9) au niveau duquel la cage (6) est connectée à l'élément de ressort (8) se situe au milieu entre les deux points d'extrémité (10, 11).

5. Guidage linéaire selon l'une quelconque des revendications 1 à 4, **caractérisé en ce que** le support sur palier linéaire (4) présente des pistes de roulement (12) pour les corps de roulement (5), les pistes de roulement (12) étant disposées sur ou dans les éléments de guidage (2, 3).

6. Guidage linéaire selon l'une quelconque des revendications 1 à 5, **caractérisé en ce que** deux supports sur palier linéaires (4) sont disposés de manière à s'étendre parallèlement l'un à l'autre entre les éléments de guidage (2, 3).

7. Guidage linéaire selon l'une quelconque des revendications 1 à 6, **caractérisé en ce que** deux éléments de ressort (8) sont disposés dans les régions latérales (13, 14) des éléments de guidage (2, 3).

8. Guidage linéaire selon la revendication 6 ou 7, **caractérisé en ce que** le moyen de serrage (7) est disposé entre les deux supports sur palier linéaires (4).

9. Guidage linéaire selon l'une quelconque des revendications 6 à 8, **caractérisé en ce que** l'agencement des deux supports sur palier linéaires (4) et des éléments de ressort (8) est symétrique.

10. Guidage linéaire selon la revendication 9, **caractérisé en ce que** le plan de symétrie (15) s'étend à travers le moyen de serrage (7).

11. Guidage linéaire selon l'une quelconque des revendications 1 à 10, **caractérisé en ce que** le moyen de serrage (7) est réalisé sous forme de vis de serrage.

12. Guidage linéaire selon l'une quelconque des revendications 1 à 11, **caractérisé en ce que** les corps de roulement (5) sont des billes.

13. Guidage linéaire selon l'une quelconque des revendications 1 à 12, **caractérisé en ce que** la direction de déplacement (T) est orientée verticalement.

14. Guidage linéaire selon l'une quelconque des revendications 1 à 13, **caractérisé en ce que** l'au moins un élément de ressort (8) est accroché par des crochets (16, 17) aux éléments de guidage (2, 3).

15. Guidage linéaire selon l'une quelconque des revendications 1 à 14, **caractérisé en ce que** l'au moins un élément de ressort (8) est connecté à la cage au moyen d'un support en saillie (18) disposé latéralement sur la cage (6), le support venant en prise avec une portion de l'élément de ressort (8), en particulier une spire du ressort.
